Europäisches Patentamt

European Patent Office

Office européen des brevets

(19)

(11) **EP 0 875 268 B1**

(12) **FASCICULE DE BREVET EUROPEEN**

(45) Date de publication et mention
de la délivrance du brevet:
**02.07.2003 Bulletin 2003/27**

(51) Int Cl.⁷: **B01D 15/02**

(21) Numéro de dépôt: **98401000.9**

(22) Date de dépôt: **23.04.1998**

(54) **Procédé pour contrôler un système de séparation de constituants à lits mobiles simulés**

Verfahren zur Kontrolle eines Trennungssystems mit simulierten Wanderbetten

Process for controlling a separation system with simulated moving beds

(84) Etats contractants désignés:
**BE DE ES FR GB IT NL**

(30) Priorité: **30.04.1997 FR 9705485**

(43) Date de publication de la demande:
**04.11.1998 Bulletin 1998/45**

(73) Titulaire: **Institut Francais du Petrole
92852 Rueil-Malmaison Cedex (FR)**

(72) Inventeurs:
 • **Couenne, Nicolas
  69008 Lyon (FR)**
 • **Duchene, Pascal
  38200 Vienne (FR)**
 • **Hotier, Gérard
  69390 Vernaison (FR)**
 • **Humeau, Dominique
  38200 Vienne (FR)**

(56) Documents cités:
  EP-A- 0 679 421          WO-A-93/09860
  US-A- 5 387 347          US-A- 5 470 482

 • **HASHIMOTO ET AL.: "Models for the separation
  of glucose/fructose mixture using a simulated
  moving-bed" JOURNAL OF CHEMICAL
  ENGINEERING OF JAPAN, vol. 16, no. 5, octobre
  1983, TOKYO. JAPAN, pages 400-406,
  XP002052842**

EP 0 875 268 B1

**Description**

La présente invention concerne une méthode pour contrôler avec précision un processus de séparation de constituants d'un mélange, dans un système de séparation à lit mobile simulé, à partir de mesures discrètes de concentration et de débits. La méthode s'applique notamment à la séparation des hydrocarbures aromatiques.

Il existe dans l'industrie de nombreux procédés de séparation continue par adsorption sélective d'au moins un composant parmi plusieurs au sein d'un mélange de fluides, notamment des procédés de chromatographie dits à contre courant simulé où l'on utilise la propriété de certains solides poreux, en présence de mélanges liquides, gazeux ou supercritiques, de retenir plus ou moins fortement les différents constituants du mélange.

Les procédés de séparation ou fractionnement basés sur la chromatographie sont le plus souvent mis en oeuvre dans un dispositif comportant un ensemble de colonnes ou fractions de colonnes interconnectées en série, formant une boucle fermée. Le long de cette boucle sont répartis des points d'injection pour le mélange à séparer et le solvant ou désorbant, et des points d'extraction de fluides: extrait et raffinat, délimitant différentes zones. Toutes les colonnes ou fractions de colonne d'une même zone sont traversées par un débit liquide identique.

Les dispositifs sont le plus souvent constitués de quatre zones principales. Cependant, il en existe qui n'en comportent que trois (dans ce cas, la zone comprise entre le prélèvement de raffinat et l'injection de solvant est omise). Il en existe également à cinq zones où une partie de l'extrait séparé du solvant est réinjectée entre le prélèvement d'extrait et l'injection de charge. D'autres encore peuvent comporter de cinq à sept zones où des fluides secondaires permettent de rincer des lignes véhiculant successivement plusieurs fluides, de manière à éviter les contaminations.

Un solide poreux, de granulométrie déterminée, constitue la phase stationnaire. Le mélange à séparer est introduit dans la colonne puis déplacé au moyen d'un fluide vecteur ou désorbant et les différents constituants sortent successivement selon qu'ils sont retenus plus ou moins fortement par la phase stationnaire.

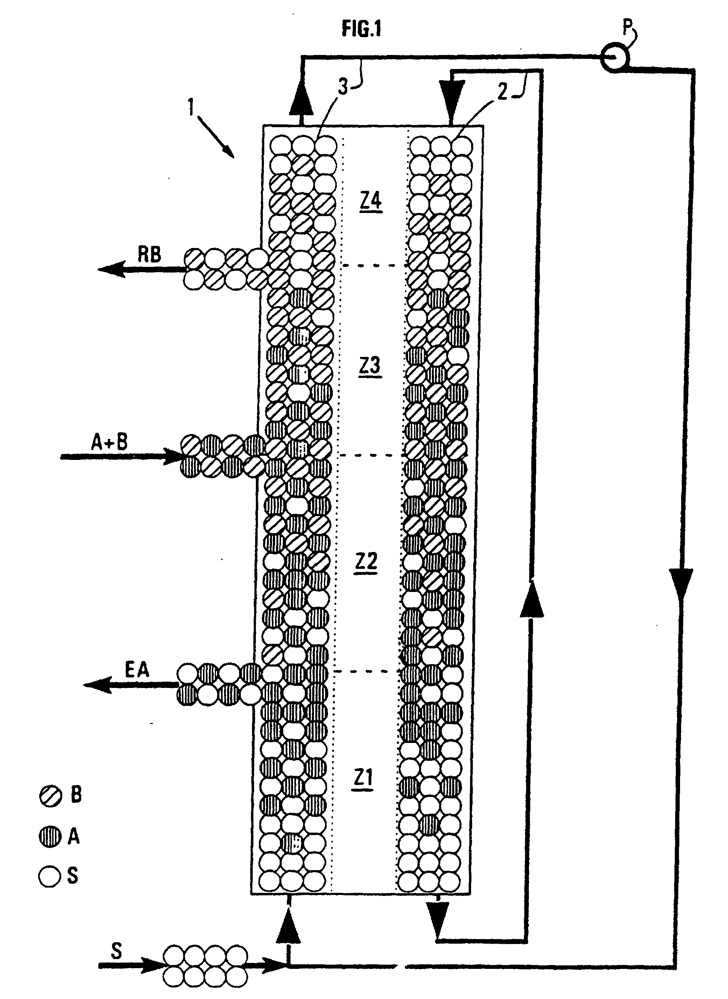

Dans un procédé à contre courant réel (Fig.1), un profil des concentrations fixe et constant se développe dans une colonne 1 de séparation, où la position des points d'injection d'une charge A+B, d'un éluant S, et de soutirage d'un extrait EA et d'un raffinat RB reste fixe. Le solide adsorbant 2 et le liquide 3 se déplacent à contre courant. Un système d'entraînement du solide et une pompe P de recyclage, placés tous les deux à l'emplacement de la colonne (à la jonction des zones I et IV) où la seule espèce présente tant dans le liquide que dans le solide est le fluide vecteur d'élution, permettent de renvoyer respectivement le solide de la base vers le sommet, et le liquide inversement du sommet vers la base.

Les procédés dits à lits mobiles simulés permettent d'échapper à une difficulté majeure inhérente aux procédés à lits mobiles vrais, celle de faire correctement circuler la phase solide sans créer d'attrition et sans augmenter considérablement la porosité de lit par rapport à celle d'un lit fixe. Pour simuler son déplacement, le solide est disposé dans un certain nombre n de lits fixes (en général, $4 \leq n \leq 24$). disposés en série et c'est le profil de concentrations que l'on déplace à vitesse sensiblement uniforme tout autour d'une boucle fermée.

En pratique, le décalage successif des points d'injection et de soutirage se fait à l'aide d'une vanne rotative ou plus simplement d'un ensemble de vannes tout ou rien convenablement commandées. Ce décalage circulaire, effectué à chaque période, des différents débits liquides d'entrée-sortie dans un sens donné revient à simuler un déplacement de l'adsorbant solide dans l'autre sens.

Des procédés par chromatographie en lit mobile simulé, à contre-courant ou co-courant, sont par exemple décrits dans les brevets US 2 985 589 ou US 4 402 832.

Un système de séparation en présence d'au moins un éluant, d'une charge comprenant au moins deux constituants, en au moins deux fractions, comporte généralement n colonnes ou tronçons de colonnes chromatographiques montées en séries et en boucle fermée (en général, $4 \leq n \leq 24$), dans lesquelles on fait circuler un mélange liquide, supercritique ou gazeux sous pression, la boucle présentant au moins un courant d'injection de la charge, au moins un courant d'injection de l'éluant, au moins un courant de soutirage d'extrait et au moins un courant de soutirage du raffinat, le constituant préférentiellement recherché se trouvant en majorité soit dans l'extrait soit dans le raffinat.

Les débits liquides d'entrée principaux sont les suivants : le débit de charge et le débit d'éluant. Le débit de sortie est le débit d'extrait. Le raffinat est prélevé sous contrôle de pression. Le débit de raffinat est égal à la somme des débits d'entrée moins le débit d'extrait. A ces débits contrôlés s'ajoute un débit de recyclage contrôlé également à une valeur dépendant de la position de la pompe à un instant donné. L'emplacement relatif de chacun des quatre flux autour des lits est calculé afin d'obtenir un comportement satisfaisant fonction du type de séparation à effectuer et définit ainsi quatre zones distinctes dans le cas du procédé présenté en figure 1.

Par les brevets US 5 457 260 et 5 470 482, on connaît aussi un procédé de contrôle d'un système de séparation à lits mobiles simulés d'un mélange de constituants, comprenant deux colonnes à lits multiples interconnectées en boucle, dans lequel on contrôle au moins une caractéristique telle que la pureté d'un constituant ou son rendement ou une combinaison des deux. Le procédé comporte la mesure de la concentration des différents constituants du mélange en circulation dans les circuits d'interconnexion des colonnes, notamment par spectroscopie dans le proche infra-rouge, et l'utilisation d'un algorithme d'ajustement itératif du type à régression multivariable ou de type réseaux neuronaux tendant à faire diminuer l'écart entre la valeur courante de la caractéristique et une valeur de consigne jusqu'à un certain seuil. L'algorithme utilisé est du type "boite noire" avec tous les inconvénients liés à ce type d'approche : un temps de mise en oeuvre important puisque le résultat n'est obtenu qu'après de nombreux essais, il n'est exploitable que dans le domaine des tests effectués et il est obtenu avec une précision faible, celle de la modélisation des non linéarités en général.

Dans la suite du texte, on désignera par :

- variables commandées, des variables qui doivent être constamment proches d'une valeur de consigne préalablement spécifiée et qui traduisent le bon fonctionnement du procédé. Il s'agit par exemple de la pureté des constituants d'un extrait, du rendement de l'unité de séparation de séparation pour un certain constituant etc.;

- variables opératoires, des variables pouvant être modifiées par l'opérateur, telles que les débits ou encore la période de commutation de vannes permettant de simuler le déplacement des lits etc.;

- variables de commande, des variables qui agissent principalement sur une seule zone par exemple sur la partie du profil de concentration contenue dans une zone. Ces variables de commande sont déterminées par l'algorithme de contrôle, et sont traduites en variables opératoires.

On rappelle que le but d'un procédé de contrôle avancé du fonctionnement d'une boucle de séparation est de calculer une loi de commande (ensemble des valeurs des variables opératoires au cours du temps) pour :

- asservir le fonctionnement i.e. calculer une loi de commande capable d'assurer la transition entre deux valeurs distinctes d'une ou de plusieurs variables commandées choisies a priori; et

- réguler le fonctionnement i.e. calculer une loi de commande capable de compenser au mieux (par avance ou au moins asymptotiquement) toutes les perturbations extérieures agissant sur le processus afin que les variables commandées choisies a priori gardent une valeur quasi constante.

Dans le cas d'une unité de séparation de lit mobile simulé, la régulation peut également compenser des perturbations dues à une évolution dans le temps des paramètres thermodynamiques et géométriques de l'adsorbant (bien entendu pour une détérioration limitée des propriétés de l'adsorbant).

Ces objectifs sont remplis avec le procédé de contrôle automatique d'un processus de séparation de constituants d'un mélange de fluides en circulation, selon l'invention, qui permet d'éviter les inconvénients ci-dessus mentionnés. Il est basé non sur une technique de type "boite noire" mais sur une approche plus maîtrisée permise par une modélisation non linéaire du processus de séparation.

Le procédé selon l'invention s'applique au contrôle d'un système (ou unité de séparation) de séparation de constituants à lits mobiles simulés comprenant une boucle fermée constituée par l'interconnexion en série de lits contenant de la matière solide adsorbante, répartis en plusieurs zones délimitées par des points d'injection et des points d'extraction de fluides, des moyens d'injection de fluides dans la boucle, des moyens d'extraction de fluides hors de la boucle, des moyens de permutation des points d'injection et des points d'extraction, permettant de simuler le déplacement des lits à contre-courant, et des moyens de mesure de diverses variables (telles que des concentrations, des débits, la période de permutation des vannes etc.). Il est caractérisé en ce qu'il comporte :

- la mesure de variable opératoires et de concentrations de certains constituants nécessaires au calcul de variables commandées en un nombre de points de la boucle de séparation au moins égal à deux.;

- la détermination, à partir de valeurs courantes de variables mesurées, et en utilisant un modèle déterminé du fonctionnement du système de séparation (soit un modèle non linéaire, soit un modèle linéaire au voisinage d'un point de fonctionnement donné), de ratios (Rk) indicatifs respectivement du rapport dans chacune des différentes zones, entre les débits de fluides ($Q_k$) et les débits simulés de matière adsorbante ($Q_s$) de façon à amener ou ramener les variables commandées jusqu'à des valeurs de consignes déterminées; et

- la détermination à partir de ces ratios (Rk), des valeurs à donner aux variables opératoires .

Sur un tronçon de la boucle de séparation comprenant un ensemble d'étages contigus englobant n zones, où sont définis n ratios (Rk), le procédé comporte généralement, la définition de m variables commandées ($\xi$) fonctions de valeurs de débits (D) et de concentrations (X), avec m inférieur ou égal à n, la mesure des concentrations (X) en phase liquide aux points extrêmes du tronçon (dans le cas d'un contrôle non linéaire uniquement), et la détermination de m des dits ratios (Rk), ou de m combinaisons de ces dits ratios comportant (n-m) paramètres.

Suivant un mode de mise en oeuvre, avec une boucle de séparation comportant quatre zones principales, on contrôle simultanément plusieurs variables commandées ($\xi$) telles que le rendement de la boucle et la pureté d'au moins un constituant du mélange à partir de mesures en ligne de différentes concentrations.

Pour la mesure de concentrations on utilise par exemple une analyse en ligne de type Raman ou chromatographique ou dans le proche infra-rouge (PIR).

Suivant un mode de mise en oeuvre, dans le cas d'une unité de séparation ou système de séparation à quatre zones, on choisit comme variables commandées, une au moins des quatre grandeurs suivantes: la pureté d'un premier constituant dans un fluide extrait de la boucle, le rendement du système de séparation pour un constituant (le même que pour la pureté ou bien un autre), une traînée du dit premier constituant à l'arrière d'une première des quatre zones, relativemement au sens de la circulation des fluides; et/ou la traînée de l'ensemble des constituants autres que le dit premier constituant à l'avant d'une dernière des dites quatre zones, relativement au sens de la circulation des fluides.

La méthode permet, connaissant les valeurs de ratios (Rk) dans un système de contrôle comprenant un certain nombre p de zones, de déterminer les valeurs correspondantes de ratios supplémentaires dus à l'introduction dans la boucle de séparation d'au moins un point d'injection supplémentaire et/ou d'au moins un point de soutirage supplémentaire en fonction de la valeur connue du ratio dans une section adjacente et de la valeur du débit d'injection et/ou de soutirage considéré.

Comme variable commandée, on peut choisir la valeur d'un rapport entre les concentrations de constituants d'un fluide soutiré.

On peut utiliser avantageusement un algorithme d'optimisation permettant d'assurer le suivi de valeurs de consigne fixées pour des variables commandées.

La méthode présentée peut aisément être utilisée pour contrôler autant de variables commandées ($\xi$) qu'il existe de ratios (Rk). Ces variables commandées pourront être par exemple des mesures de productivité, de taux de solvant, de traînées etc.

La méthode selon l'invention permet de maintenir un fonctionnement stable de l'unité de séparation de séparation même en présence de variations de débit ou de qualité de charge.

D'autres caractéristiques et avantages de la méthode selon l'invention, apparaîtront à la lecture de la description ci-après d'un exemple non limitatif de réalisation, en se référant aux dessins annexés où :

- la Fig. 1 est un schéma fonctionnel d'une boucle de séparation à lits mobiles vrais;

- la Fig.2 illustre le principe de la discrétisation utilisée pour écrire les équations de bilan matière;

- la Fig.3 est un schéma fonctionnel d'une interzone entre deux tronçons d'une boucle pour illustrer le calcul des ratios;

- la Fig.4 montre un organigramme des différentes phases du processus de contrôle de boucle;

- la Fig.5 schématise une boucle de séparation à quatre zones, quatre points d'injection ou de soutirage et huit points de mesure;

- la Fig.6 représente un chronogramme des modifications apportées à la composition d'une charge pour illustrer dans les simulations suivantes un exemple de régulation;

- la Fig.7 montre des chronogrammes de l'évolution de deux variables commandées i.e. la pureté d'un extrait et le rendement de l'installation, consécutifs à la modification apportée:

- la Fig.8 montre l'efficacité du contrôle apporté dans les mêmes conditions par l'application du procédé selon l'invention; et

- les Fig.9 à 12 montrent des chronogrammes d'évolution de quatre variables opératoires durant la stabilisation du processus, respectivement, le débit de recyclage (Fig.9), le débit d'extrait (Fig.10), la période de permutation (Fig. 11), et le débit de raffinat (Fig.12).

**DESCRIPTION DETAILLEE**

On considère donc une unité de séparation de séparation comprenant une boucle fermée de séparation à lits mobiles simulé qui est divisée en au moins quatre zones, chaque zone étant séparée de la suivante par un courant d'injection ou de soutirage, les courants d'injection et de soutirage étant permutés à intervalles de temps sensiblement constants. La boucle contient une pompe de recyclage du dit mélange, régulée en débit, qui est située entre deux colonnes ou tronçons de colonnes successifs et éventuellement au moins un moyen de mesure des concentrations de la phase liquide, placé également entre deux colonnes ou tronçons de colonnes consécutifs.

On peut utiliser avantageusement un appareil de mesure de type Raman tel que celui décrit dans le brevet FR 2.699.917 (US 5.569.808) du demandeur qui donne accès à un nombre élevé de mesures de concentration en temps réel et donc permet de fournir le profil de concentration en différents points le long de la boucle. Il suffit alors de choisir librement n mesures, (n nombre compris généralement entre deux et huit pour un système de séparation à quatre zones) réparties judicieusement dans les différentes zones, afin d'assurer un bon fonctionnement de l'algorithme de contrôle du processus.

**I) <u>Choix des variables</u>**

<u>a) Variables commandées</u>

On définit les variables commandées comme des fonctions $\xi$ de plusieurs variables :

$$(1) \; \xi = F(D,X),$$

où

- X est un vecteur représentant les concentrations des différents constituants dans la phase liquide en différents points (cette valeur pouvant être soit instantanée, soit une moyenne des valeurs prises sur une période de permutation),

- D est un vecteur dont chaque élément est un débit interne, d'injection ou de soutirage.

Comme exemple de variable commandée, on peut citer la pureté $\xi$ d'un constituant dans la phase liquide en un point quelconque de l'unité de séparation (sur un flux de sortie par exemple) :

$$\xi = x_i \, / \, (x_i + Imp_i),$$

où

- $x_i$ est la concentration du constituant i en un point donné,

- $Imp_i$ est la somme des concentrations des autres constituants considérés comme des impuretés en ce même point (ce qui peut exclure certains constituants comme par exemple l'éluant).

Le calcul de cette variable commandée à un instant donné suppose donc la mesure de l'ensemble des concentrations en présence dans la phase liquide en un ou plusieurs points de la boucle. Ces mesures pourront se faire par exemple comme il a été dit plus haut par analyse de type Raman, ou par tout autre procédé.

Le choix des variables commandées est a priori libre. Dans le cas d'une unité de séparation à 4 zones, on peut choisir par exemple comme variables commandées, les grandeurs que l'opérateur a l'habitude de rechercher le plus souvent :

1) la pureté d'un des constituants dans l'extrait,

2) le rendement de l'unité de séparation pour ce même constituant,

3) la traînée à l'arrière (par rapport au sens de la circulation des fluides) de la zone 1 du constituant considéré dans les points 1) et 2).

4) la traînée à l'avant (par rapport au sens de la circulation des fluides) de la zone 4 de l'ensemble des constituants hormis le constituant considéré dans les points 1), 2) ou 3).

b) Variables de commande:

La méthode selon l'invention comporte la sélection de variables de commande par le biais desquelles on peut déterminer directement les valeurs à donner aux variables opératoires pour contrôler l'évolution des variables commandées.

La conversion de ces variables de commande en variables opératoires "classiques" est toujours possible, en dehors des contraintes physiques réelles d'application liées au dimensionnement du procédé et de son équipement, car il existe une relation biunivoque entre elles, condition nécessaire pour rendre le système de séparation parfaitement contrôlable.

Dans le cas où toutes les variables opératoires sont libres (c'est-à-dire qu'on peut fixer librement leur valeur sans que les contraintes physiques en cause ne soient atteintes) le nombre nécessaire de variables de commande indépendantes est égal au nombre de zones constituant l'unité de séparation de séparation.

On sait que le fonctionnement d'un système de séparation à lits mobiles simulé est quasi-identique à celui d'un système à lits mobiles vrais si, pour celui-ci, les débits circulant à contre-courant du débit liquide principal sont donnés par les relations suivantes

$$(2) \qquad Q_s = (\%V_{micro} * V_{colonne}) / T$$

$Q_s$ est le "débit de solide" (correspondant à la capacité utile) équivalent à celui engendré par la permutation des vannes dans l'unité de séparation de lit mobile simulé.

$$(3) \qquad q_e = ( (\%V_{macro} + \%V_{méso} + \%V_{vi}) * V_{colonne} ) / T$$

$q_e$ est le "contre-débit liquide" équivalent à celui engendré par la permutation des vannes. Il correspond à la quantité de liquide contenu dans les méso- et macro-porosités, ainsi que dans la porosité externe ou encore dans la porosité de grains ajoutée à la porosité du lit. On l'appelle généralement le "débit d'arrêt" ou le débit d'entraînement. Il correspond à l'immobilisation d'un fluide non adsorbé dans la microporosité de l'adsorbant.

Dans les relations (2) et (3),

- $T$ représente la valeur de la période de permutation des vannes de l'unité de séparation de lit mobile simulé,

- $V_{colonne}$, est le volume élémentaire d'un tronçon d'unité de séparation (volume compris entre deux points successifs d'injection et/ou de soutirage actifs ou non),

- $\%V_{micro}$, $\%V_{meso}$, $\%V_{macro}$, $\%V_{vi}$ sont respectivement les pourcentages de volume micro poreux (capacité utile), méso-poreux, macro-poreux, et de porosité externe du lit.

La présence d'un volume mort qui n'apparait pas dans l'équation (3) et qui correspond aux volumes morts entre les lits de tamis successifs est cependant pris en compte par l'artifice d'une majoration globale des différents pourcentages de l'équation (3).

Les débits liquides externes sont les mêmes pour les deux types d'unité de séparations. Par contre les débits internes sont différents entre un lit mobile simulé et un lit mobile vrai. Ces débits sont liés par la relation :

$$Q_k = F_k + q_e$$

où $Q_k$ est le débit liquide traversant la zone k de l'unité de séparation à lits mobiles simulés,

$F_k$ est le débit liquide traversant la zone k de l'unité de séparation à lits mobiles vrais.

Si l'on prend l'exemple du traceur non adsorbé que l'on doit maintenir immobile, le débit nécessaire est nul pour une unité de séparation à lits mobiles vrais, alors qu'il est égal au débit d'arrêt $q_e$ pour une unité de séparation à lits mobiles simulés.

c) Ratios

Compte-tenu de ces définitions, on choisit comme variables indépendantes de commande quatre rapports adimensionnels ou "ratios" $R_k$ (k=1, 2, 3 ou 4) entre les débits liquides principaux dans chacune des zones et le débit de solide qui est constant dans toute l'unité de séparation :

$$(4) \qquad R_k = Q_k / Qs$$

Le choix des quatre ratios $R_k$ pour la commande découle de l'écriture des équations de bilan matière du modèle d'une unité de séparation de lit mobile vrai à l'état stationnaire sur une portion de colonne que l'on discrétise. Par exemple on représente ci dessous une discrétisation réalisée avec trois points (j-1, j, j+1), compte-tenu des circulations de fluides à contre-courant.

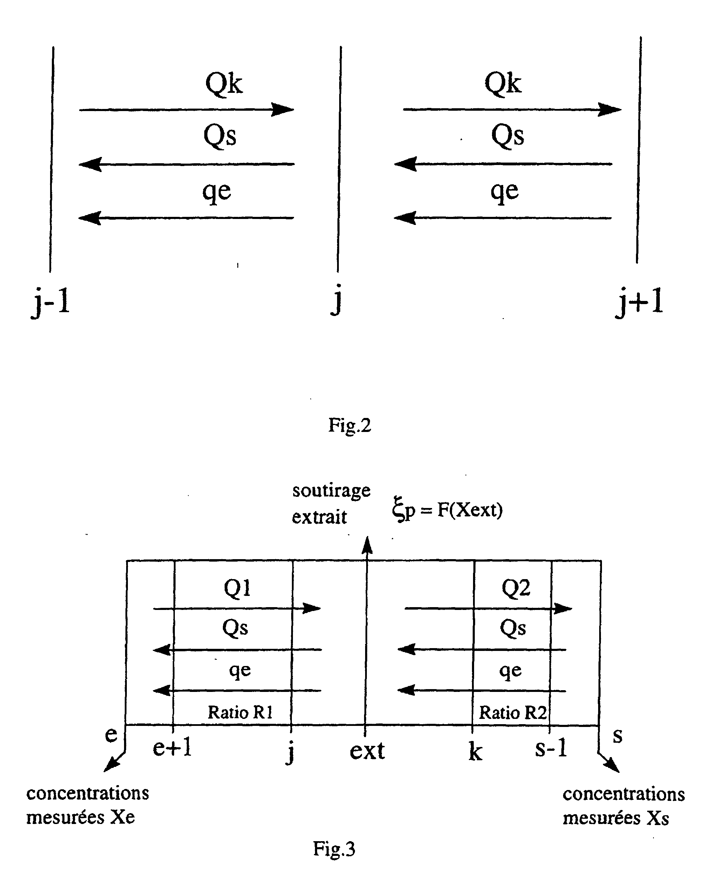

En notant $x_{i,j}$ la concentration du constituant i au point j dans la phase liquide et $y_{i,j}$ la concentration de ce même constituant en équilibre dans la phase solide au point j, (Fig.2) le bilan matière pour ce constituant s'écrit :

$$Q_k \, ( \, x_{i,j-1} - x_{i,j} ) + Qs \, ( \, y_{i,j+1} - y_{i,j} ) + qe \, (x_{i,j+1} - x_{i,j}) = 0$$

Soit en divisant par Qs :

$$(5) \qquad (Qk/Qs)( \, x_{i,j-1} - x_{i,j} ) + (y_{i,j+1} - y_{i,j}) + (qe/Qs)(x_{i,j+1} - x_{i,j} \, ) = 0$$

Avec les définitions respectives de Qs et qe, exprimées par les relations (1), (2) :

$$\frac{qe}{Q_S} = \frac{\% V_{meso} + \% V_{macro} + \% V_{vi}}{\% V_{micro}} = K_0 = \text{constante}$$

et l'équation (5) s'écrit

$$(7) \qquad R_k \, ( \, x_{i,j-1} - x_{i,j} \, ) + ( \, y_{i,j+1} - y_{i,j} ) + K_0 \, (x_{i,j+1} - x_{i,j}) = 0$$

La seule variable de commande (le paramètre librement modifiable de l'équation ci- dessus) est le ratio $R_k$ qui, compte-tenu de sa définition, est connu sur chaque zone constituant l'unité de séparation. Il y a autant de ratios que de zones. Ces valeurs de ratios peuvent être traduites, au choix de l'utilisateur ou de l'opérateur, en variables opératoires habituelles avec les relations algébriques inversibles liant les valeurs de $Q_k$.

Dans une unité de séparation à 4 zones, il existe une relation biunivoque entre les 4 ratios et 4 des 5 variables opératoires suivantes :

T, Q1, Qsolvant, Qextrait, Qcharge,

la 5$^{\text{ième}}$ variable étant un paramètre (param) que l'on décide de fixer. C'est le plus souvent le débit de charge Qcharge. Il en résulte les relations suivantes liant les ratios aux variables opératoires :

$$(6) \qquad \text{si param} = Qcharge$$

T= %Vmicro * Vcolonne * (R3 - R2) / param

Q1 = param * R1 / (R3 - R2)

Qsolvant = param * (R1 - R4) / (R3 - R2)

Qextrait = param * (R1 - R2) / (R3 - R2)

Ce système est défini si param<>0 (ce qui est également équivalent à R3 <> R2)
Le choix de 4 variables parmi 5 permet par exemple de fonctionner :

- soit à charge constante ou variable mais imposée par ailleurs par le procédé,

- soit à débit de solvant constant,

- à période de permutation des vannes constante, etc.

**II) _Algorithmes de calcul des ratios_**

**_1) Modèle non linéaire_**

L'algorithme de calcul, qui permet de calculer les ratios (tels que définis ci-dessus) de telle sorte que les variables commandées prennent les valeurs que l'on se fixe a priori, intègre un modèle physique non linéaire de l'unité de séparation de lit mobile vrai. La méthode de calcul est robuste, très rapide et suppose que l'on dispose en ligne de suffisamment de mesures.

a) Principe du calcul d'un ratio :

Sur un tronçon i.e. un ensemble d'étages contigus englobant une ou plusieurs zones, où sont définis n ratios, on s'impose par exemple m variables commandées de la forme donnée par l'équation (1), convenablement choisies par l'homme de l'art, avec m inférieur ou égal à n. A l'aide des équations algébriques (6) définissant le modèle statique et des mesures disponibles des concentrations en phase liquide aux points extrêmes du tronçon, ces m variables commandées permettent de calculer m ratios ou m combinaisons de ces ratios comportant (n-m) paramètres.

b) Exemple du calcul de la pureté pour une unité de séparation comportant 4 zones :

La pureté $\xi p$ est définie uniquement à partir de la connaissance de la composition de l'extrait (Xext) :

$$\xi p = F(Xext)$$

On choisit un tronçon (Fig.3) composé d'une partie de la zone 1 et d'une partie de la zone 2 dans lequel par conséquent on peut définir deux ratios. La connaissance du ratio R1 (imposé par ailleurs), des concentrations de tous les constituants en phase liquide aux points extrêmes Xe et Xs et de la consigne de la pureté (variable commandée) permet de calculer le ratio R2.

En effet on peut écrire à partir de l'équation (7) et pour un constituant i (l'exposant $^m$ indique une valeur réellement mesurée) :

- sur l'étage e+1 :

$$R_1 \left( x^m_{i,e} - x_{i,e+1} \right) + \left( \left( y_{i,e+2} - y_{i,e+1} \right) + K \left( x_{i,e+2} - x_{i,e+1} \right) \right) = 0$$

- sur l'étage j compris entre l'étage e et l'étage ext de soutirage d'extrait :

$$R_1 \left( x_{i,j-1} - x_{i;j} \right) + \left( y_{i,j+1} - y_{i,j} \right) + K \left( x_{i,j+1} - x_{i,j} \right) = 0$$

- sur l'étage ext correspondant au soutirage d'extrait :

$$R_1 \left( x_{i,ext-1} - x_{i,ext} \right) + \left( \left( y_{i,ext+1} - y_{i,ext} \right) + K \left( x_{i,ext+1} - x_{i,ext} \right) \right) = 0$$

- sur l'étage k compris entre le soutirage d'extrait ext et l'étage s-1 :

$$R_2 \left( x_{i,k-1} - x_{i,k} \right) + \left( y_{i,k+1} - y_{i,k} \right) + K \left( x_{i,k+1} - x_{i,k} \right) = 0$$

- sur l'étage s-1 :

$$R_2 ( x_{i,s-2} - x_{i,s-1} ) + ( y^m_{i,s} - y_{i,s-1} ) + K (x^m_{i,s} - x_{i,s-1} ) = 0$$

c) Existence d'une solution.

Compte tenu de la forme des équations précédentes, il existe une solution unique si le nombre d'équations est égal au nombre d'inconnues. Les inconnues sont les valeurs des concentrations des constituants présents dans le phase liquide sur chaque étage plus le ratio en zone 2, soit : nc ( s - e + 1 ) + 1, où ne représente le nombre de constituants.

Le nombre d'équations est égal au nombre d'étages compris entre e+1 et s+1 multiplié par le nombre de constituants, soit : nc ( s - e + 1 ). Une équation complémentaire est donnée par la valeur de la variable commandée souhaitée soit : $\xi p$ - F(Xext) = 0

Ce système d'équations algébriques non linéaires de dimension :

$$[nc ( s - e + 1 ) + 1 ] * [ nc ( s - e + 1 ) + 1 ]$$

est résolu par une méthode d'approximation de Newton. D'autres fonctions de sortie peuvent être définies d'une manière analogue comme le rendement, la productivité, les trainées.

Certaines fonctions de sortie dépendent explicitement des valeurs de débits imposées à l'unité de séparation. Par exemple le rendement de l'unité de séparation de séparation en constituant 1, est défini par :

$$Rendement = 100 - (Qraf * x_{1,raf}) / (Qcharge * x_{1,charge} )$$

Cette fonction peut simplement s'exprimer en fonction des ratios :

$$Rendement = 100 - ( R3 - R4 * x_{1.raf}) / ( R3 - R2\ x_{1,charge})$$

d) Exemples

Les simulations présentées ci-dessous, concernent une unité de séparation de séparation des xylènes à lits mobiles simulés à 4 zones (ceci ne limitant en rien le domaine d'application de l'invention). On cherche à purifier le paraxylène que l'on récupère dans l'extrait. La charge contient 5 constituants à savoir du paraxylène, du métaxylène, de l'orthoxylène, de l'éthylbenzène et des paraffines. Les deux variables commandées principales sont la pureté du paraxylène et le rendement en paraxylène de l'unité de séparation de séparation. Les valeurs des variables commandées dépendent de la position de l'unité de séparation de séparation dans l'ensemble de la boucle de traitement des aromatiques.

Les moyens d'analyse doivent être adaptés aux fonctions de sortie à mesurer en terme de précision et de temps de réponse.

e) Choix des variables commandées :

1) La pureté du paraxylène dans l'extrait définie par la relation :

$$\xi 1 = PXe / (PXe + IMPe),$$

où :

- PXe est la valeur moyenne de la concentration du paraxylène en phase liquide au point de soutirage de l'extrait.

- IMPe est la somme des concentrations des autres constituants présents dans la phase liquide au niveau du soutirage de l'extrait en dehors du solvant (et éventuellement des paraffines).

La valeur de $\xi1$ dépend essentiellement de la valeur IMPe car Pxe est sensiblement constant. IMPe dépend principalement du ratio en zone 2 (R2).

2) le rendement de l'unité de séparation en paraxylène défini par la relation :

$$\xi_2 = \frac{PX_e Q_{extrait}}{PX_c Q_{charge} + PX_s Q_{solvant}}$$

soit encore son équivalent en régime stationnaire :

$$\xi_2 = \frac{PX_c Q_{charge} + PX_s Q_{solvant} - PX_r Q_{raffinat}}{PX_c Q_{charge} + PX_s Q_{solvant}}$$

où PXc, PXs et PXr sont respectivement les valeurs de la concentration du paraxylène en phase liquide dans la charge, le solvant et le raffinat.

$Q_{extrait}$, $Q_{charge}$, $Q_{solvant}$ et $Q_{raffinat}$ sont respectivement les débits d'extrait, de charge, de solvant et de raffinat.

La valeur de $\xi2$ dépend principalement de la valeur PXr donc du ratio en zone 3 (R3). Elle dépend également du débit de charge, de solvant et de raffinat ainsi que de la composition en paraxylène de la charge et du solvant.

Compte-tenu de ce qui a été précédemment exposé concernant le nombre de variables de commande disponibles pour une unité de séparation comportant quatre zones, on doit choisir deux variables commandées supplémentaires :

3) la traînée de paraxylène dans la phase liquide à l'arrière (par rapport au sens de la circulation des fluides) de la zone 1 que l'on peut définir par la relation :

$$\xi3 = PX4$$

Le point de mesure choisi est situé au ¾ de la longueur de la zone 4. La valeur de $\xi3$ dépend principalement du ratio en zone 1 (R1);

4) la traînée de l'ensemble des constituants hormis le paraxylène à l'avant (par rapport au sens de la circulation des fluides) de la zone 4 que l'on peut définir par la relation :

$$\xi4 = IMP1$$

où IMP1 est la somme des concentrations de tous les constituants présents dans la phase liquide à l'exception du paraxylène et du solvant ( et éventuellement des paraffines).

Le point de mesure choisi est situé au 1/4 de la longueur de la zone 1. La valeur de $\xi4$ dépend principalement du ratio en zone 4 (R4).

<u>f) Mise en oeuvre de l'algorithme de commande : calcul des variables de commande ou ratios</u>

Le principe de la commande est d'utiliser les équations du modèle sur des tronçons d'unité de séparation. Dans le cas choisi, on utilise les trois tronçons suivants :

- Le premier tronçon T1 est compris entre la moitié de la zone 4 et la moitié de la zone 1. Il permet le calcul simultané des ratios en zone 4 (R4) et en zone 1 (R1). Ceci est possible car les variables commandées $\xi3$ et $\xi4$ sont définies sur ce tronçon.

- Le deuxième tronçon T2 est compris entre la moitié de la zone 1 et la moitié de la zone 2. Ce tronçon permet le calcul du ratio R2 connaissant R1. La variable $\xi2$ est située au milieu de ce tronçon.

- Le troisième tronçon T3 est compris entre la moitié de la zone 3 et la moitié de la zone 4. Ce tronçon permet le calcul du ratio R3 connaissant R4. La variable ξ3 est située au milieu de ce tronçon.

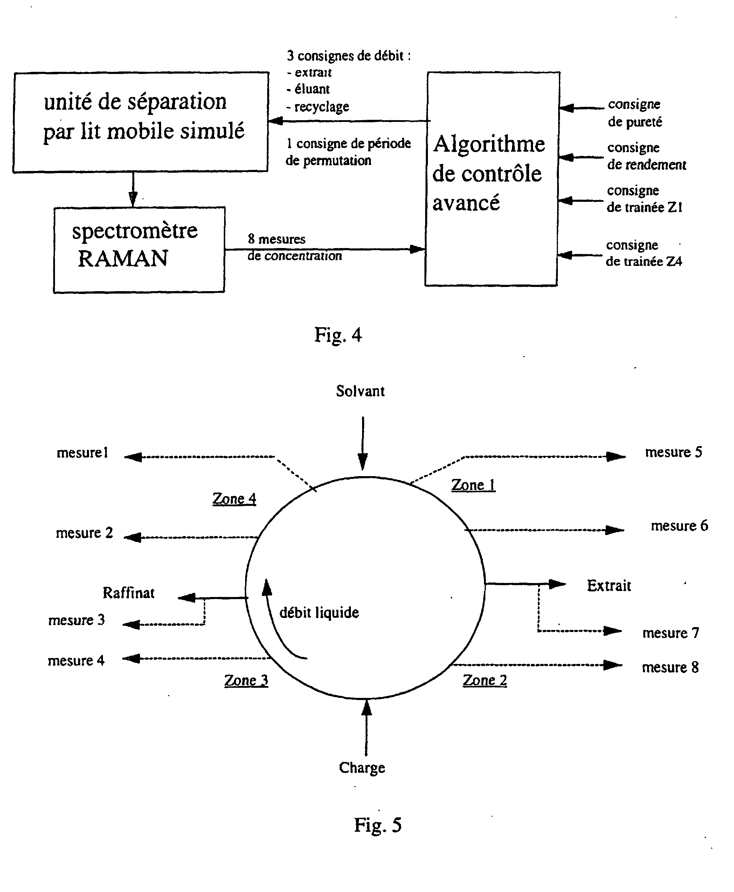

D'un point de vue pratique, il convient ensuite de choisir les variables opératoires qui sont effectivement disponibles sur l'unité de séparation. On choisit les quatre variables suivantes: le débit d'extrait, le débit de recyclage, le débit d'éluant et la période T de permutation des vannes (par conséquent le débit de charge est choisi par l'opérateur et le débit de raffinat se déduit à chaque instant par bilan matière). Le bouclage de l'algorithme sur l'unité de séparation est présenté en Fig.4 pour l'exemple considéré.

g) Simulation

Une simulation a été effectuée à partir d'un modèle de connaissance de l'unité de séparation de séparation. Dans un tel modèle sont incluses des connaissances de type thermodynamique et des connaisances de type cinétique. La thermodynamique du système est représentée par des isothermes d'adsorption. Dans le cas étudié ici, ces isothermes sont non linéaires et couplées. Il peut s'agir d'un isotherme de Langmuir généralisée à n constituants (sélectivité d'adsorption constantes) ou de préférence, d'une isotherme à sélectivités non constantes telles que des sélectivités à deux seuils reliés par une pente, ou encore d'une isotherme de Langmuir- Freunlich généralisée à n constituants. La cinétique du système est représentée par des plateaux théoriques ou encore par un coefficient de dispersion propre à chacun des n constituants.

Le nombre de points de mesure utilisé est de 8, répartis comme indiqué sur la Fig.5. Le modèle de connaissance employé dans ce cas est une isotherme de Langmuir- Freunlich associée à une cascade de plateaux théoriques. Le nombre de mesures et leur position dépendent du choix des tronçons qui ont été sélectionnés comme indiqué ci-dessus. Bien entendu ce choix n'est ici qu'illustratif et l'invention recouvre toutes les combinaisons de tronçons compatibles avec le(s) objectif(s) demandé(s).

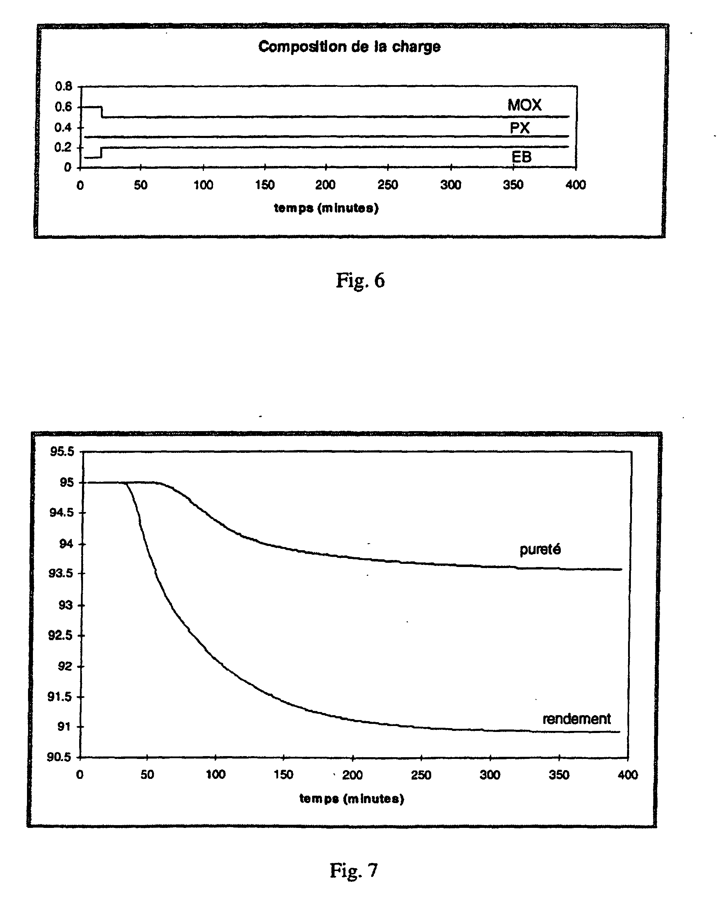

Le résultat présenté est un exemple de régulation. Le procédé fonctionne à consigne constante de pureté (95%) et de rendement (95%) alors que la composition de la charge est sensiblement changée. La modification de la qualité de la charge est provoquée après dix minutes de fonctionnement stable (Fig.6).

On substitue à une charge dont la composition volume est la suivante :

Tol =        0.022

Px =         0.290

MxOx =     0.598

EB =         0.102

Par =        0.032

une charge dont la composition volume est la suivante:

Tol =        0.024

Px =         0.290

MxOx =     0.512

EB =         0.190

Par =        0.032

L'effet de la perturbation décrite sur la Fig.6 est représentée en Fig.7 en l'absence de l'algorithme de commande. Elle se traduit par une diminution de pureté de 1.2% et de rendement de 4%. Le procédé est donc très sensible à cette perturbation de qualité de la charge.

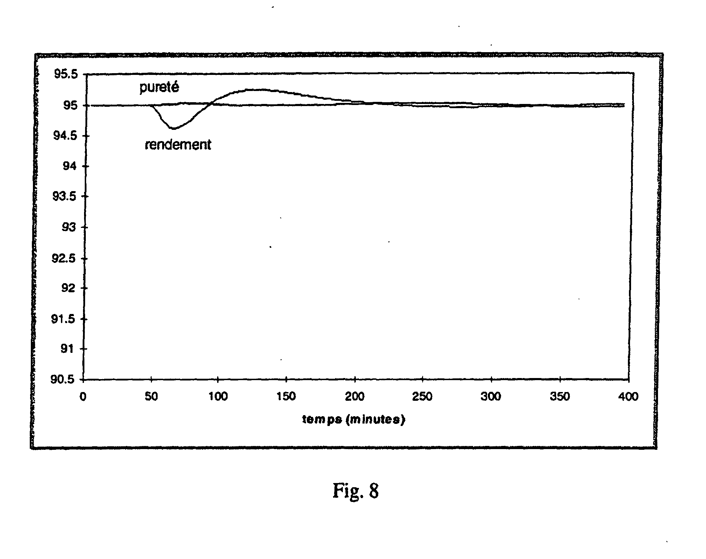

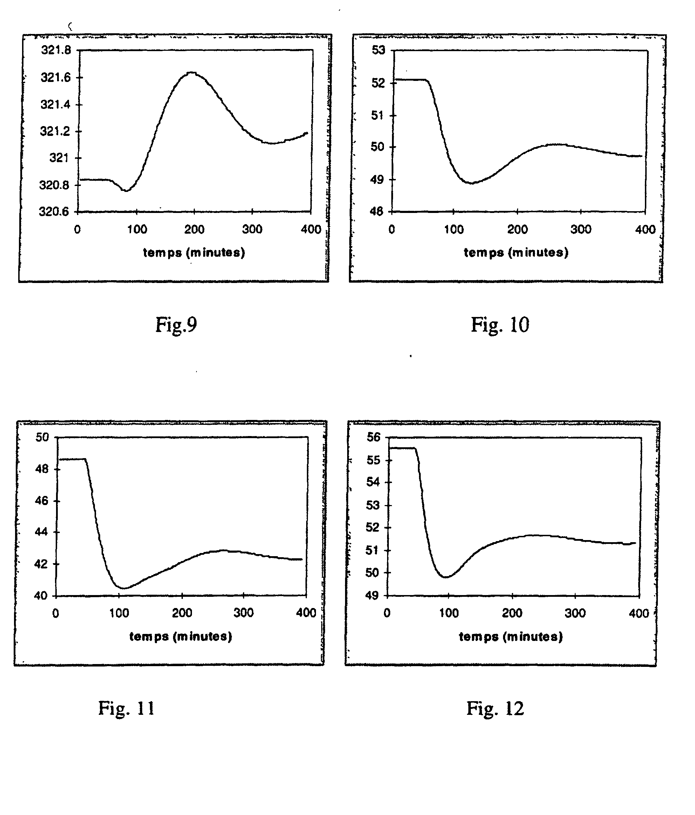

La même perturbation est appliquée au procédé selon l'invention (Fig.8) La stabilisation du procédé s'effectue en environ 180 minutes soit 3 heures. L'écart sur la pureté est négligeable. L'écart maximum sur le rendement est inférieur à 0.45%. On peut remarquer que les quatre commandes évoluent simultanément (Fig.9 à 12) de manière significative.

En présence de perturbations, le fonctionnement de la boucle de séparation est difficilement maîtrisable par un opérateur qui doit agir, comme on le voit, sur quatre variables simultanément. Il faudra dans ces conditions au mieux 24 heures et plusieurs opérations de stabilisation successives à un opérateur très expérimenté pour espérer restabiliser le processus.

La réduction très importante des périodes transitoires de production hors spécification nécessaires pour la stabilisation, permise par la mise en oeuvre du procédé selon l'invention, se traduit industriellement par une augmentation corrélative de la productivité.

h) Variantes :

L'algorithme peut aussi être utilisé en association avec un modèle numérique de simulation du procédé pour positionner l'ensemble des variables opératoires.

Il s'agit ici d'optimiser le fonctionnement du modèle d'unité de séparation dans plusieurs cas de figure : dimensionnement d'unité de séparation, démarrage d'unité de séparation, optimisation finale près d'une solution déjà correcte, utilisation d'une unité de séparation préexistante avec un problème de séparation différent etc. Naturellement, cette utilisation ne se conçoit qu'avec un modèle proche de la réalité physique tel que décrit dans le paragraphe précédent. Bien entendu, dans ce cas, la valeur de réglage ne produit pas exactement les performances attendues, elles peuvent alors être soit inférieures soit supérieures à celles désirées suivant la précision du modèle simulé. Le bouclage de l'algorithme permettra alors d'atteindre précisément les spécifications à partir de ces valeurs approchées.

### 2) Modèle linéaire

Suivant un deuxième mode de mise en oeuvre la détermination, à partir de valeurs courantes de variables mesurées, des ratios (Rk) peut être réalisée également en utilisant des modèles linéaires mono-variables (représentatif du comportement d'une sortie vis à vis des variations d'une entrée) ou multivariable (représentatifs du comportement de plusieurs sorties vis à vis de plusieurs entrées). La détermination de ces modèles « simples » s'effectue à partir d'un jeu de mesures expérimentales obtenu sur le procédé fonctionnant dans un état proche de son état stable prévu.

Ces modèles ne sont généralement représentatifs que près d'un point de fonctionnement stable du processus de séparation.

A partir de ces modèles on peut facilement synthétiser une loi de commande linéaire classique (du type commande à modèle interne, commande prédictive etc.). La simplicité des modèles permet de calculer facilement des lois de commande simples et robustes compensant d'une certaine manière l'imprécision de la représentation choisie. Les tests de performance de la loi de commande ainsi calculée sont, en simulation, équivalents à ceux obtenus avec la loi de commande calculée à partir du modèle physique non linéaire du processus décrit dans la première partie.

### III) Variantes de mise en oeuvre

#### 1)Points d'injection supplémentaires

*L'utilisation des modes de contrôle aussi bien non linéaire que* linéaire, décrits précédemment dans le cadre d'une unité de séparation à 4 zones, peut s'étendre rigoureusement aux cas d'unité de séparation comportant un nombre de zones supérieur du fait du rajout d'un ou de plusieurs points d'injections de fluide. Dans ce cas le calcul des ratios R1, R2, R3 et R4 reste le même si l'on considère que le ou les débits d'injection supplémentaires sont imposés par l'opérateur (directement ou indirectement comme une proportion du débit de charge ou d'extrait par exemple). La valeur du ou des ratios dépendant de la ou des nouvelles injections, résulte simplement de la valeur du ratio adjacent connu et de la valeur du débit d'injection considéré.

#### 2) Points de soutirage supplémentaires

L'utilisation des modes de contrôle non linéaire et linéaire, décrits précédemment dans le cadre d'une unité de séparation à 4 zones, peut également s'étendre rigoureusement aux cas d'unité de séparation comportant un nombre de zones supérieur du fait du rajout d'un ou de plusieurs points de soutirage de fluide. Dans ce cas, on généralise le calcul des ratios R2 ou R3 aux ratios supplémentaires générés par les nouveaux soutirages. Il faut donc définir une fonction de sortie sur chaque fluide soutiré en fonction de la spécification souhaitée (par exemple une spécification de pureté ou de rendement). Dans ce cas, chaque valeur de débit de soutirage rajouté devient une nouvelle variable opératoire indépendante pour le processus de séparation.

Si aucune spécification n'est désirée sur le soutirage supplémentaire alors la valeur du débit est imposée par l'opérateur et l'on se retrouve dans le cas précédent.

3) Points d'injection et de soutirages supplémentaires

L'utilisation des modes de contrôle non linéaire et linéaire, décrits précédemment dans le cadre d'une unité de séparation à 4 zones, peut également s'étendre rigoureusement aux cas d'unité de séparations de séparation comportant un nombre de zones supérieur du fait du rajout combiné d'un ou de plusieurs points d'injection de fluide et d'un ou de plusieurs points de soutirage de fluide. Il suffit de reprendre, en les globalisant, les raisonnements décrits dans les deux paragraphes précédents.

4) Variables commandées : alternatives

Quel que soit le mode de contrôle utilisé, qu'il soit linéaire ou non linéaire, on peut remplacer une des variables commandées citées i.e. pureté d'un composant, rendement de l'unité de séparation pour un certain constituant (le même que pour la pureté ou un autre) ou valeur des traînées en zone 1 et en zone 4, par une nouvelle variable pouvant être commandée qui est la valeur du rapport entre les compositions d'un fluide soutiré. Par exemple, dans l'extrait on peut choisir de commander à la fois la pureté du paraxylène (principalement avec R2) mais aussi de commander la variable définie par le rapport entre la concentration en éthylbenzène et la somme des concentrations en métaxylène et orthoxylène. Cette dernière variable sera principalement influencé par le ratio R4.

5) Optimisation des modes de contrôle

Les modes de contrôle linéaire et non linéaire, tels que définis précédemment, peuvent être interfacés avec un algorithme d'optimisation proposant un ensemble de consignes aux variables commandées décrites au paragraphe précédent permettant ainsi de garantir un fonctionnement optimal au sens de la minimisation d'une fonction définie par les contraintes opératoires.

**Revendications**

1. Procédé pour contrôler un système de séparation de constituants à lits mobiles simulés comprenant une boucle fermée constituée par l'interconnexion en série de lits contenant de la matière solide adsorbante, répartis en plusieurs zones délimitées par des points d'injection et des points d'extraction de fluides, des moyens d'injection de fluides dans la boucle, des moyens d'extraction de fluides hors de la boucle, des moyens de permutation des points d'injection et des points d'extraction, permettant de simuler le déplacement des lits à contre-courant, et des moyens de mesure de variables opératoires Il est **caractérisé en ce qu'**il comporte :

   - la mesure, en une pluralité de points le long de la boucle, de variables caractéristiques des fluides injectés et soutirés et de variables caractéristiques du fonctionnement du procédé;

   - la détermination, à partir de valeurs courantes de variables mesurées et en utilisant un modèle de l'unité de séparation, de ratios (Rk) indicatifs respectivement du rapport dans chacune des différentes zones, entre les débits de fluides ($Q_k$) et les débits simulés de matière adsorbante ($Q_s$), de façon à amener ou ramener les variables commandées ($\xi$) jusqu'à des valeurs de consigne déterminées ; et

   - la détermination à partir de ces ratios (Rk), des valeurs à donner aux variables opératoires.

2. Procédé selon la revendication 1, **caractérisé en ce que** l'on détermine les valeurs à donner aux variables opératoires en utilisant un modèle non linéaire du système de séparation.

3. Procédé selon la revendication 1, **caractérisé en ce que** l'on détermine les valeurs à donner aux dites variables opératoires en utilisant une modélisation linéaire, au voisinage d'un point de fonctionnement donné.

4. Procédé selon la revendication 1 ou 3, **caractérisé en ce qu'**il comporte, sur un tronçon de la boucle de séparation comprenant un ensemble d'étages contigus englobant n zones, où sont définis n ratios (Rk), la définition de m variables commandées ($\xi$) fonctions de valeurs de débits (D) et de concentrations (X), avec m inférieur ou égal à n, et la détermination de m des dits ratios (Rk), ou de m combinaisons de ces dits ratios comportant (n-m) paramètres.

5. Procédé selon l'une des revendications 1 ou 2, **caractérisé en ce qu'**il comporte, sur un tronçon de la boucle de séparation comprenant un ensemble d'étages contigus englobant n zones, où sont définis n ratios (Rk), la définition de m variables commandées ($\xi$) fonctions de valeurs de débits (D) et de concentrations (X), avec m inférieur ou égal à n, les mesures des concentrations en phase liquide effectuées aux points extrêmes du tronçon, et la détermination de m des dits ratios (Rk), ou de m combinaisons de ces dits ratios comportant (n-m) paramètres.

6. Procédé selon l'une des revendications précédentes, **caractérisé en ce que** les variables opératoires sont des débits et la période (T) de commutation de vannes permettant de simuler le déplacement des lits.

7. Procédé selon l'une des revendications précédentes, **caractérisé en ce que** la boucle de séparation comportant quatre zones principales, on contrôle simultanément des variables commandées ($\xi$) telles que le rendement de la boucle et la pureté d'au moins un constituant du mélange à partir de mesures en ligne de différentes concentrations.

8. Procédé selon l'une des revendications précédentes, **caractérisé en ce qu'**il comporte la mesure de concentrations par une analyse en ligne de type Raman ou chromatographique ou dans le proche infra-rouge (PIR).

9. Procédé selon l'une des revendications précédentes. **caractérisé en ce que**, dans le cas d'un système de séparation à quatre zones, on choisit comme variables commandées, au moins une des quatre grandeurs suivantes : pureté d'un premier constituant dans un fluide extrait de la boucle de séparation, rendement du système de séparation pour un constituant, traînée du dit premier constituant à l'arrière d'une première des quatre zones, relativement au sens de la circulation des fluides, ou traînée de l'ensemble des constituants autres que le dit premier constituant à l'avant d'une dernière des dites quatre zones, relativement au sens de la circulation des fluides.

10. Procédé selon l'une des revendications précédentes, **caractérisé en ce que** pour la simulation du système de séparation, on utilise un modèle de connaissance basé sur des isothermes couplées et non linéaires telles que des valeurs de sélectivités à deux seuils ou des isothermes de Langmuir- Freundlich généralisées.

11. Procédé selon l'une des revendications précédentes, **caractérisé en ce que**, connaissant les valeurs de ratios (Rk) dans un système de contrôle comprenant un certain nombre p de zones, on détermine les valeurs correspondantes de ratios supplémentaires dus à l'introduction dans la boucle de séparation d'au moins un point d'injection supplémentaire en fonction de la valeur connue du ratio dans une section adjacente et de la valeur du débit d'injection considéré.

12. Procédé selon l'une des revendications précédentes, **caractérisé en ce que**, connaissant les valeurs de ratios (Rk) dans un système de contrôle comprenant un certain nombre p de zones, on détermine les valeurs correspondantes de ratios supplémentaires dus à l'introduction dans la boucle de séparation d'au moins un point de soutirage supplémentaire en fonction de la valeur connue du ratio dans une section adjacente et de la valeur du débit d'injection considéré.

13. Procédé selon la revendication 8, **caractérisé en ce que** l'on choisit comme variable commandée la valeur d'un rapport entre les concentrations de constituants d'un fluide soutiré.

14. Procédé selon l'une des revendications précédentes, **caractérisé en ce que** l'on utilise un algorithme d'optimisation permettant d'assurer le suivi de valeurs de consigne fixées pour des variables commandées.

15. Application du procédé selon l'une des revendications précédentes, à la séparation d'hydrocarbures aromatiques à huit atomes de carbone.

**Patentansprüche**

1. Verfahren zum Regeln eines Trennsystems von Bestandteilen mit simulierten beweglichen Betten, umfassend eine geschlossene Schleife, die aus einer Verbindung untereinander in Reihe von Betten besteht, welche festes adsorbierendes Material enthalten und in mehrere Zonen verteilt sind, die durch Injektionspunkte und Extraktionspunkte von Fluiden begrenzt sind. Mittel zur Injektion von Fluiden in die Schleife, Mittel zur Extraktion von Fluiden aus der Schleife, Mittel zur Vertauschung der Injektions- und Extraktionspunkte, die es ermöglichen, die Bewegung der Betten bei Gegenstrom zu simulieren und Messmittel von Betriebsvariablen, es ist **dadurch gekennzeichnet, dass** es umfasst:

- das Messen an einer Vielzahl von Punkten entlang der Schleife von Variablen, die für die eingespritzten und abgezogenen Fluide charakteristisch sind und von Variablen, die für den Betrieb des Verfahrens charakteristisch sind;
- die Bestimmung ausgehend von geläufigen Werten von gemessenen Variablen und unter Verwendung eines Modells der Trenneinheit, von Verhältnissen (Rk), die jeweils das Verhältnis in jeder der verschiedenen Zonen zwischen den Fluiddurchsätzen ($Q_k$) und den simulierten Durchsätzen von adsorbierendem Material ($Q_s$) anzeigen, um die Steuervariablen bis auf vorgegebene Einstellwerte zu führen oder zurückzuführen; und
- ausgehend von diesen Verhältnissen (Rk) die Bestimmung der den Betriebsvariablen zu verleihenden Werte.

2. Verfahren nach Anspruch 1, **dadurch gekennzeichnet, dass** man die den Betriebsvariablen zu verleihenden Werte bestimmt, indem man ein nichtlineares Modell des Trennsystems verwendet.

3. Verfahren nach Anspruch 1, **dadurch gekennzeichnet, dass** man die den Betriebsvariablen zu verleihenden Werte bestimmt, indem man eine lineare Modellierung in der Nähe eines vorgegebenen Betriebspunktes verwendet.

4. Verfahren nach Anspruch 1 oder 3, **dadurch gekennzeichnet, dass** es über einen Abschnitt der Trennschleife, welcher eine Anordnung von aneinandergrenzenden Stufen, die n Zonen einbeziehen, umfasst, wo n Verhältnisse (Rk) definiert sind, die Definition von m Steuervariablen ($\xi$) abhängig von Durchsatzwerten (D) und Konzentrationswerten (X) mit m kleiner oder gleich n, die in Flüssigphase an Endpunkten des Abschnitts durchgeführten Konzentrationsmessungen und die Bestimmung von m der Verhältnisse (Rk) oder von m Kombinationen dieser Verhältnisse umfasst, welche (n-m) Parameter umfassen.

5. Verfahren nach den Ansprüchen 1 oder 2, **dadurch gekennzeichnet, dass** es über einen Abschnitt der Trennschleife, welcher eine Anordnung von aneinandergrenzenden Stufen, die n Zonen einbeziehen, umfasst, wo n Verhältnisse (Rk) definiert sind, die Definition von m Steuervariablen ($\xi$) abhängig von Durchsatzwerten (D) und Konzentrationswerten (X) mit m kleiner oder gleich n, die in Flüssigphase an Endpunkten des Abschnitts durchgeführten Konzentrationsmessungen und die Bestimmung von m der Verhältnisse (Rk) oder von m Kombinationen dieser Verhältnisse umfasst, welche (n-m) Parameter umfassen.

6. Verfahren nach einem der vorhergehenden Ansprüche, **dadurch gekennzeichnet, dass** die Betriebsvariablen Durchsätze und die Vertauschungsperiode (T) von Ventilen sind, was es ermöglicht, die Bewegung der Betten zu simulieren.

7. Verfahren nach einem der vorhergehenden Ansprüche, **dadurch gekennzeichnet, dass** die Trennschleife vier Hauptzonen umfasst und man simultan Steuervariablen ($\xi$), wie die Ausbeute der Schleife und die Reinheit wenigstens eines Bestandteils der Mischung ausgehend von Messungen in Reihe von verschiedenen Konzentrationen regelt.

8. Verfahren nach einem der vorhergehenden Ansprüche, **dadurch gekennzeichnet, dass** es die Messung von Konzentrationen durch eine Analyse in Reihe vom Raman- oder Chromatographietyp oder im Nah-Infrarotbereich (PIR) umfasst.

9. Verfahren nach einem der vorhergehenden Ansprüche, **dadurch gekennzeichnet, dass** im Fall eines Trennsystems mit vier Zonen man als Steuervariablen wenigstens eine der vier folgenden Größen wählt: Reinheit eines ersten Bestandteils in einem aus der Trennschleife abgezogenen Fluid, Ausbeute des Trennsystems für eine Bestandteil, Mitziehen des ersten Bestandteiles hinter eine ersten der vier Zonen, relativ in Fließrichtung der Fluide, oder Mitziehen der Gesamtheit der anderen Bestandteile außer des ersten Bestandteiles vor einer letzten der vier Zonen, relativ in Fließrichtung der Fluide.

10. Verfahren nach einem der vorhergehenden Ansprüche, **dadurch gekennzeichnet, dass** man für die Simulation des Trennsystems ein Kenntnissystem verwendet, das auf gekoppelten und nichtlinearen Isothermen basiert wie Selektivitätswerten mit zwei Schwellen oder generalisierten Langmuir-Freundlich-Isothermen.

11. Verfahren nach einem der vorhergehenden Ansprüche, **dadurch gekennzeichnet, dass** man die Werte der Verhältnisse (Rk) in einem Regelungssystem, welches eine bestimmte Anzahl p von Zonen umfasst, kennend, die entsprechenden Werte von zusätzlichen Verhältnissen aufgrund der Einführung in die Trennschleife von wenigstens einem zusätzlichen Injektionspunkt in Abhängigkeit des bekannten Wertes des Verhältnisses in einem anliegenden Abschnitt und des Werts des betrachteten Injektionsdurchsatzes festlegt.

**12.** Verfahren nach einem der vorhergehenden Ansprüche, **dadurch gekennzeichnet, dass** man die Werte der Verhältnisse (Rk) in einem Regelungssystem, welches eine bestimmte Anzahl p von Zonen umfasst, kennend, die entsprechenden Werte von zusätzlichen Verhältnissen aufgrund der Einführung in die Trennschleife von wenigstens einem zusätzlichen Abzugspunkt in Abhängigkeit des bekannten Wertes des Verhältnisses in einem anliegenden Abschnitt und des Werts des betrachteten Injektionsdurchsatzes festlegt.

**13.** Verfahren nach Anspruch 8, **dadurch gekennzeichnet, dass** man als Steuervariable des Wertes ein Verhältnis zwischen den Konzentrationen von Bestandteilen eines abgezogenen Fluids wählt.

**14.** Verfahren nach einem der vorhergehenden Ansprüche, **dadurch gekennzeichnet, dass** man einen Optimierungsalgorithmus verwendet, der es ermöglicht, die Folge von festgelegten Einstellwerten für die Steuervariablen sicherzustellen.

**15.** Verwendung des Verfahrens nach einem der vorhergehenden Ansprüche bei der Trennung von aromatischen Kohlenwasserstoffen mit acht Kohlenstoffatomen.

**Claims**

**1.** Process for controlling a system for component separation with simulated moving beds comprising a closed loop formed by interconnection in series of beds containing solid adsorbent material, divided into a plurality of zones defined by points for injection and points for extraction of fluids, means for injection of fluids into the loop, means for extraction of fluids from the loop, means for permutation of the injection points and the extraction points, permitting simulation of the displacement of the beds in counter-current, and means for measurement of process variables, that is ***characterised by*** *the fact that* it includes:

- measurement, at a plurality of points along the loop, of variables characteristic of the fluids injected and drawn off and of variables characteristic of the operation of the process;

- determination, from current values of measured variables and using a model of the separation unit, of ratios (Rk) respectively indicating the relationship in each of the different zones between the flow rates of fluids ($Q_k$) and the simulated flow rates of adsorbent material ($Q_s$), so as to bring or restore the controlled variables ($\xi$) to determined setpoint values; and

- determination from these ratios (Rk) of the values to be given to the process variables.

**2.** Process as described in claim 1, ***characterised by*** *the fact that* the values to be given to the process variables are determined using a non-linear model of the separation system.

**3.** Process as described in claim 1, ***characterised by*** *the* fact *that* the values to be given to the said process variables are determined using linear modelling, in the vicinity of a given process point.

**4.** Process as described in claim 1 or 3, ***characterised by*** *the fact that* it includes, over a section of the separation loop comprising a set of contiguous stages encompassing n zones, in which n ratios (Rk) are defined, the definition of m controlled variables ($\xi$) which are functions of values of flow rates (D) and concentrations (X), with m less than or equal to n, and the determination of m of the said ratios (Rk), or of m combinations of these said ratios including (n-m) parameters.

**5.** Process as described in one of claims 1 or 2, ***characterised by*** *the fact that* it includes, over a section of the separation loop comprising a set of contiguous stages encompassing n zones, in which n ratios (Rk) are defined, the definition of m controlled variables ($\xi$) which are functions of values of flow rates (D) and concentrations (X), with m less than or equal to n, the measurements of the concentrations in the liquid phase made at the extreme points of the section, and the determination of m of the said ratios (Rk), or of m combinations of these said ratios including (n-m) parameters.

**6.** Process as described in one of the preceding claims, ***characterised by*** *the fact that* the process variables are flow rates and the period (T) of switching of valves permitting simulation of the displacement of the beds.

7.  Process as described in one of the preceding claims, ***characterised by*** *the fact that* the separation loop including four main zones, the controlled variables ($\xi$) such as the yield of the loop and the purity of at least one component of the mixture are controlled simultaneously from in-line measurements of different concentrations.

8.  Process as described in one of the preceding claims, ***characterised by*** *the fact that* it includes the measurement of concentrations by an in-line analysis of Raman or chromatographic type or in the near infra-red (NIR).

9.  Process as described in one of the preceding claims, ***characterised by*** *the fact that,* in the case of a separation system with four zones, at least one of the following four magnitudes is selected as controlled variables: purity of a first component in a fluid extracted from the separation loop, yield of the separation system for one component, lag of the said first component behind a first of the four zones, relative to the direction of circulation of the fluids, or lag of all of the components other than the said first component in front of a last of the said four zones, relative to the direction of circulation of the fluids.

10. Process as described in one of the preceding claims, ***characterised by*** *the fact that,* for simulation of the separation system, a knowledge model is used based on linked and non-linear isotherms such as values of selectivities at two thresholds or generalised Langmuir-Freundlich isotherms.

11. Process as described in one of the preceding claims, ***characterised by*** *the fact that,* knowing the values of ratios (Rk) in a control system comprising a certain number p of zones, the corresponding values are determined of additional ratios due to the introduction into the separation loop of at least one additional injection point as a function of the known value of the ratio in an adjacent section and of the value of the injection flow rate in question.

12. Process as described in one of the preceding claims, ***characterised by*** *the fact that,* knowing the values of ratios (Rk) in a control system comprising a certain number p of zones, the corresponding values are determined of additional ratios due to the introduction into the separation loop of at least one additional drawing off point as a function of the known value of the ratio in an adjacent section and of the value of the injection flow rate in question.

13. Process as described in claim 8, ***characterised by*** *the fact that* the value of a relationship between the component concentrations of a fluid drawn off is selected as controlled variable.

14. Process as described in one of the preceding claims, ***characterised by*** *the fact that* an optimisation algorithm is used allowing following of fixed setpoint values for the controlled variables to be ensured.

15. Application of the process as described in one of the preceding claims to the separation of aromatic hydrocarbons with eight carbon atoms.

**FIG.1**

Qk

Qs

qe

j-1     j     j+1

Fig.2

soutirage
extrait     $\xi_p = F(X_{ext})$

Q1

Qs

qe

Ratio R1

Q2

Qs

qe

Ratio R2

e     e+1     j     ext     k     s-1     s

concentrations
mesurées Xe

concentrations
mesurées Xs

Fig.3

3 consignes de débit :
- extrait
- éluant
- recyclage

unité de séparation
par lit mobile simulé

1 consigne de période
de permutation

Algorithme
de contrôle
avancé

consigne
de pureté

consigne
de rendement

consigne
de trainée Z1

consigne
de trainée Z4

spectromètre
RAMAN

8 mesures
de concentration

Fig. 4

Solvant

mesure1

mesure 2

Raffinat

mesure 3

mesure 4

Zone 4

Zone 1

Zone 3

Zone 2

débit liquide

Extrait

mesure 5

mesure 6

mesure 7

mesure 8

Charge

Fig. 5

20

**Composition de la charge**

Fig. 6

Fig. 7

Fig. 8

Fig.9

Fig. 10

Fig. 11

Fig. 12